# EUROPÄISCHE PATENTSCHRIFT

(11) **EP 4 214 566 B1**
(45) Veröffentlichungstag und Bekanntmachung des Hinweises auf die Patenterteilung: **25.06.2025**
(21) Anmeldenummer: 21790367.3
(22) Anmeldetag: 12.08.2021
(51) Int. Cl.: G02B 27/01

(54) **GERÄT ZUM GENERIEREN EINES VIRTUELLEN BILDES MIT EINEM VERSTELLMECHANISMUS FÜR ENTSPIEGELUNGSLAMELLEN**
APPARATUS FOR GENERATING A VIRTUAL IMAGE, COMPRISING AN ADJUSTMENT MECHANISM FOR ANTIREFLECTIVE SLATS
APPAREIL DE GÉNÉRATION D'UNE IMAGE VIRTUELLE POURVU D'UN MÉCANISME DE RÉGLAGE DE LAMELLES ANTIRÉFLEXION

(30) Priorität: 17.09.2020 DE 102020211662
(43) Veröffentlichungstag der Anmeldung: 26.07.2023
(73) Patentinhaber: Continental Automotive Technologies GmbH, 30175 Hannover (DE)
(72) Erfinder: WILLE, Felicitas, 60488 Frankfurt am Main (DE); SEIFERT, Klaus, 60488 Frankfurt am Main (DE)
(74) Vertreter: Continental Corporation
(86) Internationale Anmeldenummer: PCT/DE2021/200109
(87) Internationale Veröffentlichungsnummer: WO 2022/057983

(56) Entgegenhaltungen:
- WO-A1-2007/048161
- DE-A1- 102004 063 961
- DE-A1- 102017 219 069
- DE-A1- 102018 213 061
- US-A1- 2015 226 394

## Beschreibung

Die vorliegende Erfindung betrifft einen Verstellmechanismus für Entspiegelungslamellen einer Anzeigevorrichtung mit einer bildgebenden Einheit mit einem Anzeigeelement zum Anzeigen eines Bildes und einer Optikeinheit zum Projizieren des Bildes auf eine Projektionsfläche.

Derartige Anzeigevorrichtungen können beispielsweise für ein Head-Up-Display für ein Fortbewegungsmittel verwendet werden. Unter einem Head-Up-Display, auch als HUD bezeichnet, wird ein Anzeigesystem verstanden, bei dem der Betrachter seine Blickrichtung beibehalten kann, da die darzustellenden Inhalte in sein Sichtfeld eingeblendet werden. Während derartige Systeme aufgrund ihrer Komplexität und Kosten ursprünglich vorwiegend im Bereich der Luftfahrt Verwendung fanden, werden sie inzwischen auch im Automobilbereich in Großserie verbaut.

Head-Up-Displays bestehen im Allgemeinen aus einem Bildgenerator, einer Optikeinheit und einer Spiegeleinheit. Der Bildgenerator erzeugt das Bild. Die Optikeinheit leitet das Bild auf die Spiegeleinheit. Der Bildgenerator wird oft auch als bildgebende Einheit oder PGU (Picture Generating Unit) bezeichnet. Die Spiegeleinheit ist eine teilweise spiegelnde, lichtdurchlässige Scheibe. Der Betrachter sieht also die vom Bildgenerator dargestellten Inhalte als virtuelles Bild und gleichzeitig die reale Welt hinter der Scheibe. Als Spiegeleinheit dient im Automobilbereich oftmals die Windschutzscheibe, deren gekrümmte Form bei der Darstellung berücksichtigt werden muss. Durch das Zusammenwirken von Optikeinheit und Spiegeleinheit ist das virtuelle Bild eine vergrößerte Darstellung des vom Bildgenerator erzeugten Bildes.

Der Betrachter kann das virtuelle Bild nur aus der Position der sogenannten Eyebox betrachten. Als Eyebox wird ein Bereich bezeichnet, dessen Höhe und Breite einem theoretischen Sichtfenster entspricht. So lange sich ein Auge des Betrachters innerhalb der Eyebox befindet, sind alle Elemente des virtuellen Bildes für das Auge sichtbar. Befindet sich das Auge hingegen außerhalb der Eyebox, so ist das virtuelle Bild für den Betrachter nur noch teilweise oder gar nicht sichtbar. Je größer die Eyebox ist, desto weniger eingeschränkt ist der Betrachter somit bei der Wahl seiner Sitzposition.

Die Größe der Eyebox herkömmlicher Head-Up-Displays wird durch die Größe der Optikeinheit begrenzt. Ein Ansatz zur Vergrößerung der Eyebox besteht darin, das von der bildgebenden Einheit kommende Licht in einen Lichtwellenleiter einzukoppeln. Das in den Lichtwellenleiter eingekoppelte Licht wird an dessen Grenzflächen totalreflektiert und wird somit innerhalb des Lichtwellenleiters geleitet. Zusätzlich wird an einer Vielzahl von Positionen entlang der Ausbreitungsrichtung jeweils ein Teil des Lichts ausgekoppelt. Durch den Lichtwellenleiter erfolgt auf diese Weise eine Aufweitung der Austrittspupille. Die effektive Austrittspupille setzt sich hier aus Bildern der Apertur des Bilderzeugungssystems zusammen.

Vor diesem Hintergrund beschreibt die US 2016/0124223 A1 eine Anzeigevorrichtung für virtuelle Bilder. Die Anzeigevorrichtung umfaßt einen Lichtwellenleiter, der bewirkt, daß von einer bildgebenden Einheit kommendes Licht, das durch eine erste Lichteinfallsfläche einfällt, wiederholt einer internen Reflexion unterzogen wird, um sich in einer ersten Richtung von der ersten Lichteinfallsfläche weg zu bewegen. Der Lichtwellenleiter bewirkt zudem, daß ein Teil des im Lichtwellenleiter geführten Lichts durch Bereiche einer ersten Lichtaustrittsfläche, die sich in der ersten Richtung erstreckt, nach außen austritt. Die Anzeigevorrichtung umfaßt weiterhin ein erstes lichteinfallseitiges Beugungsgitter, das auftreffendes Licht beugt, um zu bewirken, daß das gebeugte Licht in den Lichtwellenleiter eintritt, und ein erstes lichtausfallendes Beugungsgitter, das vom Lichtwellenleiter einfallendes Licht beugt. Auch die US 2012/0224062 A1 zeigt eine Anzeigevorrichtung für virtuelle Bilder mit einem Lichtwellenleiter,

Bei der aktuell bekannten Auslegung eines derartigen Geräts, bei dem der Lichtwellenleiter aus Glasplatten besteht, innerhalb derer Beugungsgitter oder Hologramme angeordnet sind, tritt ein Problem auf, falls von außen Licht einfällt.

Durch Reflexionen des von außen einfallenden Lichts kann Störlicht in das Auge des Benutzers fallen. Zudem wird der Kontrast des vom Benutzer wahrgenommenen virtuellen Bildes reduziert.

Bei herkömmlichen Geräten werden deshalb möglicherweise reflektierende Komponenten verkippt und mit Strahlfallen kombiniert, sodaß Reflexe den Bereich, in dem das Fahrerauge erwartet wird, nicht erreichen. Alternativ werden Antireflexbeschichtungen verwendet und Strukturrauigkeiten genutzt, um die Reflexintensität zu vermindern.

Das Verkippen der Komponenten kostet erheblich Bauraum, der in Automobilen begrenzt ist. Außerdem ist die Performance der Komponenten bei verkipptem Einbau in der Regel gemindert. Schichten und Strukturen verringern die erreichbare Intensität, die Reflexe bleiben in der Regel aber deutlich sichtbar und verringern den Kontrast erheblich.

Aus der DE 10 2018 213 061 A1 ist ein Gerät zum Generieren eines virtuellen Bildes bekannt, mit einem Anzeigeelement zum Erzeugen eines Bildes, einem Lichtwellenleiter zum Aufweiten einer Austrittspupille und einem dem Lichtwellenleiter im Strahlengang nachgeordneten Blendschutzelement, wobei das Blendschutzelement eine Jalousie ist, die mehrere Lamellen aufweist.

Es ist eine Aufgabe der vorliegenden Erfindung, ein verbessertes Gerät zum Generieren eines virtuellen Bildes vorzuschlagen, bei dem der Einfluß von Störlicht reduziert ist.

Diese Aufgabe wird durch ein Gerät mit den Merkmalen des Anspruchs 1 gelöst. Bevorzugte Ausgestaltungen der Erfindung sind Gegenstand der abhängigen Ansprüche.

Ein erfindungsgemäßes Gerät zum Generieren eines virtuellen Bildes weist auf ein Anzeigeelement zum Erzeugen eines Bildes, einen Lichtwellenleiter zum Aufweiten einer Austrittspupille und eine dem Lichtwellenleiter im Strahlengang nachgeordnetes Blendschutzelement, welches eine Jalousie ist, die mehrere Lamellen aufweist, deren Anstellwinkel mittels zumindest einer einstückigen Feder definiert ist. Die einstückige Feder weist eine nachgiebige Mechanik auf. Dies hat den Vorteil, Hysteresefreiheit und Spielfreiheit zu ermöglichen, was zu einer exakten Einstellung führt. Der Anstellwinkel ist bei der erfindungsgemäßen Lösung unabhängig von der Temperatur, da eine wärmebedingte Ausdehnung der einstückigen Feder gegebenenfalls deren Gesamtlänge, nicht aber deren prinzipielle Form ändert. Lamellen, die an einer Schräge definierten Winkels ausgerichtet sind, behalten diesen Winkel auch bei Wärmeausdehnung der Feder bei. Es ist vorgesehen, daß die Lamellen an Schrägen definierten Winkels anliegen und an ihren jeweiligen Enden beweglich aufgehängt sind. Alternativ dazu sind zumindest zwei einstellbare Federn vorgesehen, an deren Schrägen definierten Winkels die Lamellen in ihren Endbereichen befestigt sind.

Erfindungsgemäß weist die einstückige Feder eine erste Ebene und eine zweite Ebene auf, die mittels Übergangsschrägen miteinander verbunden sind. Dies hat den Vorteil, daß die Übergangsschrägen einen flächigen Bereich konstanter Schräge darstellen, und somit einen großen Bereich, an dem Lamellen zur Anlage kommen. Dies ermöglicht eine noch exaktere Winkeleinstellung. Die Feder wird aus einem dünnen zweidimensionalen Material gestanzt, welches nach dem Stanzen zu einem dreidimensionalen Bauteil aufgefaltet wird, indem die ursprünglich in der gleichen Ausgangsebene liegenden erste Ebene und zweite Ebene senkrecht zur ausgangseben verschoben werden und somit voneinander beanstandet und durch die Übergangsschrägen miteinander verbunden sind.

Vorteilhafterweise sind zumindest zwei parallele Reihen von Übergangsschrägen vorgesehen, die versetzt zueinander angeordnet sind. Damit ist vorteilhafte Weise eine dichtere Anordnung der Lamellen ermöglicht. Dies führt zu einer besseren Abschattung unerwünschten Lichts.

Vorteilhafterweise weist die Übergangsschräge in ihrem Übergangsbereich zu zumindest einer der ersten Ebene und der zweiten Ebene eine Perforation und/oder eine Nut und/oder eine Randausnehmung auf. Auf diese Weise wird eine erhöhte effektive Elastizität in diesem Übergangsbereich erzielt. Dies erleichtert die Verformung von der zweidimensionalen Form in die dreidimensionale Form bei der Herstellung der Feder.

Vorteilhafterweise weisen die Übergangsbereiche der einstückigen Feder unterschiedliche Länge auf. Dadurch werden vorteilhafter Weise unterschiedliche Anstellwinkel für unterschiedliche Lamellen erzielt. Dies ermöglicht die Ausbildung eines Anstellwinkel-Gradienten, der in bestimmten Konfigurationen des Geräts erwünscht ist.

Vorteilhafterweise sind mehrere Federn ineinander verschachtelt oder nebeneinander angeordnet. Dadurch wird eine dichtere Anordnung der Lamellen ermöglicht ohne daß die Federn zu filigran auszubilden sind. Die Wiederholungen pro Längeneinheit werden so vorteilhaft vervielfacht.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch ein Head-Up-Display gemäß dem Stand der Technik für ein Kraftfahrzeug;
- Fig. 2: Lichtwellenleiter mit zweidimensionaler Vergrößerung;
- Fig. 3: zeigt schematisch ein Head-Up-Display mit Lichtwellenleiter;
- Fig. 4: zeigt schematisch ein Head-Up-Display mit Lichtwellenleiter in einem Kraftfahrzeug;
- Fig. 5: zeigt schematisch ein Head-Up-Display mit Lichtwellenleiter und einer Entspiegelung als Blendschutzelement;
- Fig. 6: alternativer Lichtwellenleiter mit zweidimensionaler Vergrößerung;
- Fig. 7: zeigt schematisch ein erfindungsgemäßes Gerät zum Generieren eines virtuellen Bildes;
- Fig. 8: Jalousie sowie Ausschnittsvergrößerung davon;
- Fig. 9: Feder gemäß der Erfindung;
- Fig. 10: Feder gemäß der Erfindung;
- Fig. 11: Feder gemäß der Erfindung in Seitenansicht
- Fig. 12: Federn gemäß der Erfindung in Seitenansicht;
- Fig. 13: Feder in Seitenansicht mit und ohne Kraftausübung;
- Fig. 14: Blendschutzelement in Draufsicht, mit und ohne Kraftausübung;
- Fig. 15: Blendschutzelement in schematischer räumlicher Ansicht;
- Fig.16: schematische räumliche Darstellung einer erfindungsgemäßen Feder;
- Fig.17: Feder in Seitenansicht mit Anstellwinkelgradient.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, daß sich die Erfindung nicht auf die dargestellten Ausführungsformen beschränkt und daß die beschriebenen Merkmale auch kombiniert oder modifiziert werden können, ohne den Schutzbereich der Erfindung zu verlassen, wie er in den angehängten Ansprüchen definiert ist.

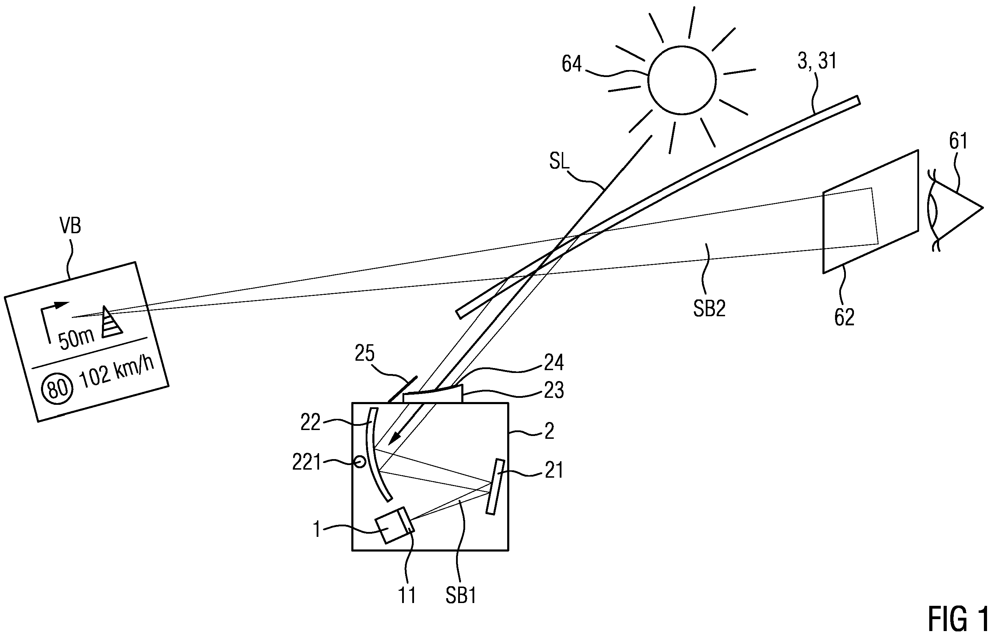

Zunächst soll anhand der Figuren 1 bis 4 der Grundgedanke eines Head-Up-Displays mit Lichtwellenleiter dargelegt werden.

Fig. 1 zeigt eine Prinzipskizze eines Head-Up-Displays gemäß dem Stand der Technik für ein Kraftfahrzeug. Das Head-Up-Display weist einen Bildgenerator 1, eine Optikeinheit 2 und eine Spiegeleinheit 3 auf. Von einem Anzeigeelement 11 geht ein Strahlenbündel SB1 aus, welches von einem Faltspiegel 21 auf einen gekrümmten Spiegel 22 reflektiert wird, der es Richtung Spiegeleinheit 3 reflektiert. Die Spiegeleinheit 3 ist hier als Windschutzscheibe 31 eines Kraftfahrzeugs dargestellt. Von dort gelangt das Strahlenbündel SB2 in Richtung eines Auges 61 eines Betrachters.

Der Betrachter sieht ein virtuelles Bild VB, welches sich außerhalb des Kraftfahrzeugs oberhalb der Motorhaube oder sogar vor dem Kraftfahrzeug befindet. Durch das Zusammenwirken von Optikeinheit 2 und Spiegeleinheit 3 ist das virtuelle Bild VB eine vergrößerte Darstellung des vom Anzeigeelement 11 angezeigten Bildes. Hier sind symbolisch eine Geschwindigkeitsbegrenzung, die aktuelle Fahrzeuggeschwindigkeit sowie Navigationsanweisungen dargestellt. So lange sich das Auge 61 innerhalb der durch ein Rechteck angedeuteten Eyebox 62 befindet, sind alle Elemente des virtuellen Bildes für das Auge 61 sichtbar. Befindet sich das Auge 61 außerhalb der Eyebox 62, so ist das virtuelle Bild VB für den Betrachter nur noch teilweise oder gar nicht sichtbar. Je größer die Eyebox 62 ist, desto weniger eingeschränkt ist der Betrachter bei der Wahl seiner Sitzposition.

Die Krümmung des gekrümmten Spiegels 22 dient zum einen dazu, den Strahlengang aufzubereiten und somit für ein größeres Bild und eine größere Eyebox 62 zu sorgen. Zum anderen gleicht die Krümmung eine Krümmung der Windschutzscheibe 31 aus, sodaß das virtuelle Bild VB einer vergrößerten Wiedergabe des vom Anzeigeelement 11 dargestellten Bildes entspricht. Der gekrümmte Spiegel 22 ist mittels einer Lagerung 221 drehbar gelagert. Die dadurch ermöglichte Drehung des gekrümmten Spiegels 22 ermöglicht ein Verschieben der Eyebox 62 und somit eine Anpassung der Position der Eyebox 62 an die Position des Auges 61. Der Faltspiegel 21 dient dazu, daß der vom Strahlenbündel SB1 zurückgelegte Weg zwischen Anzeigeelement 11 und gekrümmtem Spiegel 22 lang ist, und gleichzeitig die Optikeinheit 2 dennoch kompakt ausfällt. Die Optikeinheit 2 wird durch eine transparente Abdeckung 23 gegen die Umgebung abgegrenzt. Die optischen Elemente der Optikeinheit 2 sind somit beispielsweise gegen im Innenraum des Fahrzeugs befindlichen Staub geschützt. Auf der Abdeckung 23 befindet sich weiterhin eine optische Folie 24 oder eine Beschichtung, die einfallendes Sonnenlicht SL daran hindern soll, über die Spiegel 21, 22 auf das Anzeigeelement 11 zu gelangen. Dieses könnte sonst durch eine dabei auftretende Wärmeentwicklung vorübergehend oder auch dauerhaft geschädigt werden. Um dies zu verhindern, wird beispielsweise ein Infrarotanteil des Sonnenlichts SL mittels der optischen Folie 24 ausgefiltert oder von dieser zumindest teilweise reflektiert. Ein Blendschutz 25 dient dazu, von vorne einfallendes Licht abzuschatten, sodaß es nicht von der Abdeckung 23 in Richtung Windschutzscheibe 31 reflektiert wird, was eine Blendung des Betrachters hervorrufen könnte. Außer dem Sonnenlicht SL kann auch das Licht einer anderen Störlichtquelle 64 auf das Anzeigeelement 11 gelangen.

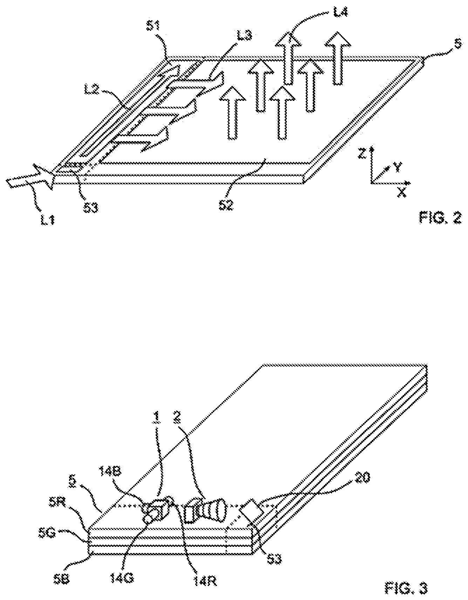

Fig. 2 zeigt in schematischer räumlicher Darstellung einen Lichtwellenleiter 5 mit zweidimensionaler Vergrößerung. Im unteren linken Bereich erkennt man ein Einkoppelhologramm 53, mittels dessen von einer nicht dargestellten bildgebenden Einheit kommendes Licht L1 in den Lichtwellenleiter 5 eingekoppelt wird. In diesem breitet es sich in der Zeichnung nach rechts oben aus, entsprechend dem Pfeil L2. In diesem Bereich des Lichtwellenleiters 5 befindet sich ein Falthologramm 51, das ähnlich wie viele hintereinander angeordnete teildurchlässige Spiegel wirkt, und ein in Y-Richtung verbreitertes, sich in X-Richtung ausbreitendes Lichtbündel erzeugt. Dies ist durch drei Pfeile L3 angedeutet. In dem sich in der Abbildung nach rechts erstreckenden Teil des Lichtwellenleiters 5 befindet sich ein Auskoppelhologramm 52, welches ebenfalls ähnlich wie viele hintereinander angeordnete teildurchlässige Spiegel wirkt, und durch Pfeile L4 angedeutet Licht in Z-Richtung nach oben aus dem Lichtwellenleiter 5 auskoppelt. Hierbei erfolgt eine Verbreiterung in X-Richtung, sodaß das ursprüngliche einfallende Lichtbündel L1 als in zwei Dimensionen vergrößertes Lichtbündel L4 den Lichtwellenleiter 5 verläßt.

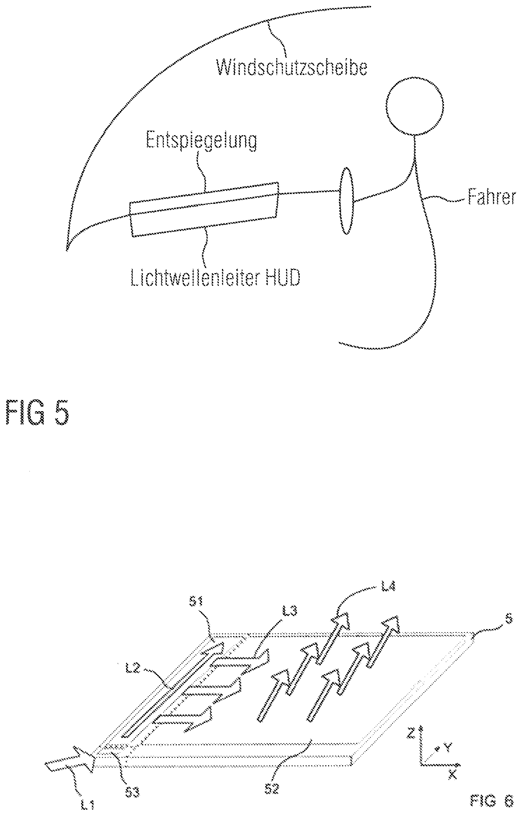

Fig. 6 zeigt in schematischer Darstellung einen zu Fig.2 alternativen Lichtwellenleiter mit zweidimensionaler Vergrößerung. Hier ist das Auskoppelhologramm 52 so ausgebildet, daß es Licht nicht senkrecht zur Oberfläche des Lichtwellenleiters 5, sondern in einem Winkel zur Z-Richtung auskoppelt, wie durch die Pfeile L4 dargestellt. Damit läßt sich der Lichtwellenleiter 5 entsprechend dem vorhandenen Bauraum anordnen, ohne daß auf einen senkrechten Austritt des in zwei Dimensionen vergrößerten Lichtbündels Rücksicht zu nehmen ist.

Fig. 3 zeigt in räumlicher Darstellung ein Head-Up-Display mit drei Lichtwellenleitern 5R, 5G, 5B, die übereinanderliegend angeordnet sind und für je eine Elementarfarbe Rot, Grün und Blau stehen. Sie bilden gemeinsam den Lichtwellenleiter 5. Die in dem Lichtwellenleiter 5 vorhandenen Hologramme 51, 52, 53 sind wellenlängenabhängig, sodaß jeweils ein Lichtwellenleiter 5R, 5G, 5B für eine der Elementarfarben verwendet wird. Oberhalb des Lichtwellenleiters 5 sind ein Bildgenerator 1 und eine Optikeinheit 2 dargestellt. Die Optikeinheit 2 weist einen Spiegel 20 auf, mittels dessen das vom Bildgenerator 1 erzeugte und von der Optikeinheit 2 geformte Licht in Richtung des jeweiligen Einkoppelhologramms 53 umgelenkt wird. Der Bildgenerator 1 weist drei Lichtquellen 14R, 14G, 14B für die drei Elementarfarben auf. Man erkennt, daß die gesamte dargestellte Einheit eine im Vergleich zu ihrer lichtabstrahlenden Fläche geringe Gesamtbauhöhe aufweist.

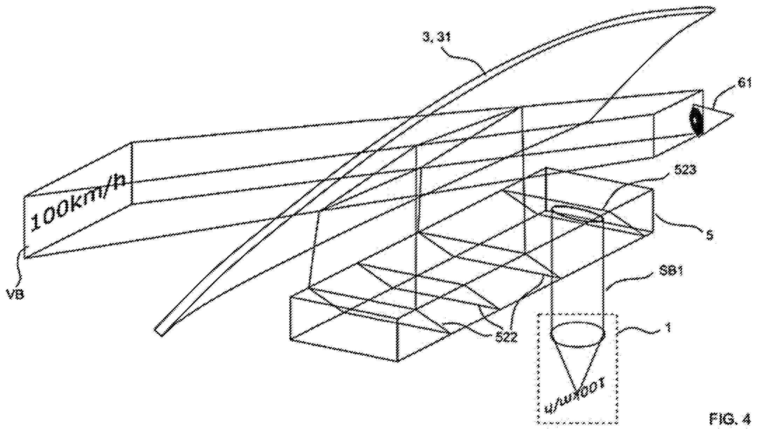

Fig. 4 zeigt ein Head-Up-Display in einem Kraftfahrzeug ähnlich zu Fig. 1, hier allerdings in räumlicher Darstellung und mit einem Lichtwellenleiter 5. Man erkennt den schematisch angedeuteten Bildgenerator 1, der ein paralleles Strahlenbündel SB1 erzeugt, welches mittels der Spiegelebene 523 in den Lichtwellenleiter 5 eingekoppelt wird. Die Optikeinheit ist der Einfachheit halber nicht dargestellt. Mehrere Spiegelebenen 522 reflektieren jeweils einen Teil des auf sie auftreffenden Lichts Richtung Windschutzscheibe 31, der Spiegeleinheit 3. Von dieser wird das Licht Richtung Auge 61 reflektiert. Der Betrachter sieht ein virtuelles Bild VB über der Motorhaube bzw. in noch weiterer Entfernung vor dem Kraftfahrzeug.

Fig. 5 zeigt schematisch ein Head-Up-Display mit Lichtwellenleiter und einer Entspiegelung als Blendschutzelement.

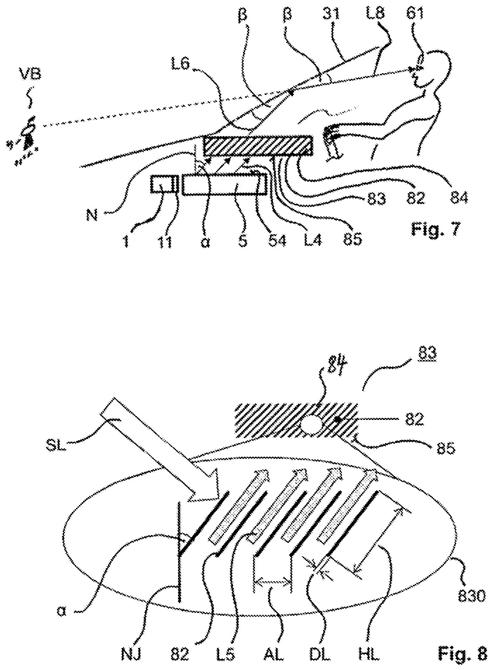

Fig.7 zeigt ein erfindungsgemäßes Gerät bei dem ein Lichtwellenleiter 5 entsprechend Fig.6 Verwendung findet. Man erkennt den Bildgenerator 1 mit Anzeigeelement 11 und den Lichtwellenleiter 5, aus dem Licht L4 in einem Winkel α zur Normalen N auf der Lichtaustrittsfläche 54 des Lichtwellenleiters 5 austritt, wobei der Winkel α größer 0° ist. Das austretende Licht L4 trifft auf die Lichteintrittsfläche 85 der Jalousie 83, deren Lamellen 82 parallel zum austretenden Licht L4 angeordnet sind, sodaß dieses die Zwischenräume 84 zwischen den Lamellen 82 ungehindert passieren kann. Das aus der Jalousie 83 austretende Licht L6 trifft unter einem Winkel β auf die Windschutzscheibe 31 und wird von dieser reflektiert und gelangt als Licht L8 ins Auge 61 eines Fahrzeuginsassen, hier des Fahrers. Dieser sieht somit ein virtuelles Bild VB. In diesem Ausführungsbeispiel bildet die Jalousie 83 die Abdeckung der Optikeinheit, ein gegebenenfalls vorhandenes separates Abdeckelement muß im Betrieb weggefahren werden. Die Jalousie 83 kann somit auch in direkten Kontakt mit sich im Fahrzeuginnenraum befindlichen Gegenständen oder Personen gelangen. Eine Beschädigung der Jalousie 83 ist somit nicht ausgeschlossen. Die Jalousie 83 ist daher vorzugsweise lösbar angeordnet, sodaß sie im Bedarfsfall ohne großen Aufwand demontiert und durch eine neue bzw. eine reparierte Jalousie 83 ersetzbar ist.

Fig.8 zeigt die Jalousie 83 sowie eine Ausschnittsvergrößerung 830. Man erkennt die Lamellen 82, die Licht L5, welches vom Lichtwellenleiter 5 kommt und im wesentlichen parallel zu den Lamellen 82 verläuft, passieren lassen. Störlicht SL, welches nicht parallel zu den Lamellen 82 verläuft, wird von den Lamellen 82 blockiert. Die Lamellen 82 weisen untereinander einen Abstand AL auf und sind um einen Winkel α gegenüber der Normalen NJ zur Lichteintrittsfläche 85 der Jalousie 83 geneigt. Die Lamellen weisen eine Höhe HL und eine Dicke DL auf, wobei die Höhe HL ein Vielfaches der Dicke DL beträgt. Der Winkel α entspricht demjenigen des Lichtaustritts aus dem Lichtwellenleiter 5 wenn dessen Lichtaustrittsfläche 54 und die Lichteintrittsfläche 85 der Jalousie 83 parallel zueinander angeordnet sind. Bei nichtparalleler Anordnung sind diese Winkel entsprechend umzurechnen. Der Winkel α hängt unter anderem von der Position des Fahrers und dessen Blickwinkel ab. Für unterschiedliche Fahrzeugtypen bzw. unterschiedliche Neigungen der Windschutzscheibe 31 ist unter anderem der Abstand AL anzupassen. Die Lamellen 82 sind vorzugsweise nichtreflektierend ausgelegt, also im wesentlichen schwarz. Sind die Lamellen verkippbar angeordnet, also ist der Winkel α im Betrieb variabel einstellbar, so lassen sich diese auf unterschiedliche Positionen der Eyebox bzw. auf unterschiedliche Positionen des Auges 61 innerhalb der Eyebox einstellen. Dies setzt voraus, daß das vom Lichtwellenleiter 5 kommende Licht einen gewissen Winkelbereich abdeckt, sodaß für jeden eingestellten Winkel α auch Lichtstrahlen an den Lamellen ankommen, die parallel zu diesen ausgerichtet sind, und diese somit passieren.

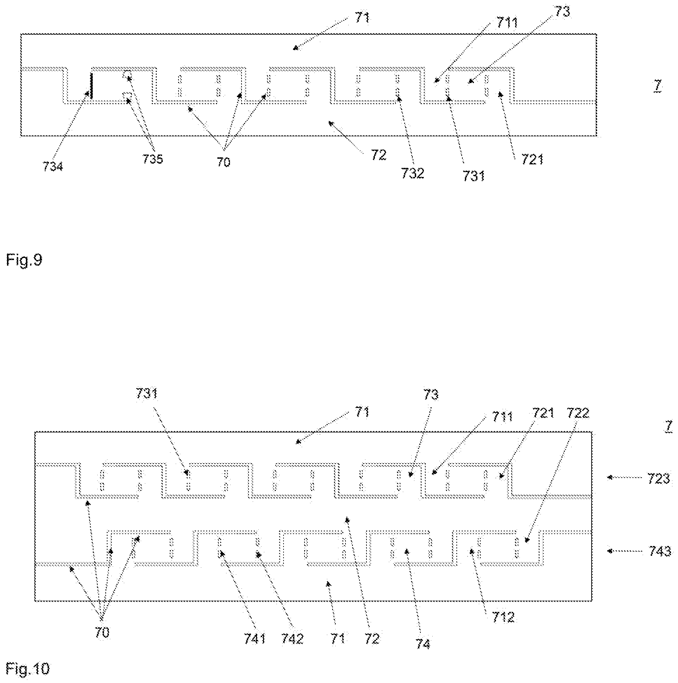

Fig. 9 zeigt eine Feder 7 gemäß der Erfindung in Draufsicht. Die Feder 7 ist hier in ihrer zweidimensionalen Form dargestellt, die sie aufweist, bevor sie bei der Produktion in ihrer dreidimensionale Form gebracht wird. Man erkennt die erste Ebene 71 und die zweite Ebene 72, die in der zweidimensionalen Form noch beide in derselben Ebene, hier der Zeichenebene, liegen. Von der ersten Ebene 71 erstrecken sich Stege 711 in Richtung der zweiten Ebene 72. Von der zweiten Ebene 72 erstrecken sich Stege 721 in Richtung der ersten Ebene 71. Übergangsschrägen 73 verbinden je einen Steg 711 mit einem Steg 721. Am Übergang zwischen einem Steg 711 der ersten Ebene 71 zur Übergangsschräge 73 ist eine Perforation 731 angeordnet. Am Übergang zwischen einem Steg 721 der 2. Ebene 72 zur Übergangsschräge 73 ist eine Perforation 732 angeordnet. An dieser Perforation 731,732 bildet sich ein Knick aus, wenn die Feder 7 aus ihrer dargestellten zweidimensionalen Form in ihrer 3-dimensionale Form verbracht wird. Die Übergangsschräge 73 steht dann im Winkel zu den Ebenen 71,72 und bildet eine in sich im wesentlichen ebene Fläche zwischen den Perforationen 731,732. Zur Herstellung der Feder 7 wird vorzugsweise ein dünnes, rechteckiges Blech oder eine entsprechende Folie verwendet, das oder die anhand einer Schnittkontur 70 geschnitten, gestanzt oder auf andere geeignete Weise bearbeitet wird. Im linken Teil der Abbildung ist beispielhaft einer Nut 734 gezeigt, die entweder anstatt der Perforation 731 oder zusätzlich zu dieser vorgesehen ist. Ebenfalls sind Randausnehmungen 735 als Alternative zu der Perforation 731 gezeigt. Es versteht sich, daß im Normalfall nur entweder Perforationen 731 oder Nuten 734 oder Randausnehmungen 735 in einer Feder 7 vorgesehen sind. Aber auch eine Kombination von 2 oder 3 dieser Elemente kann eine sinnvolle Ausgestaltungsform der Erfindung sein.

Fig. 10 zeigt eine Feder 7 gemäß der Erfindung, bei der zueinander versetzt angeordnete Übergangsschrägen 73,74 vorhanden sind. Die Übergangsschrägen 73 sind, wie zu Figur 9 gezeigt, mittels der Stege 711 mit dem im oberen Bereich der Abbildung gezeigten Teil der ersten Ebene 71, und mittels der Stege 721 mit der im mittleren Bereich der Abbildung gezeigten zweiten Ebene 72 verbunden. Im unteren Bereich der Abbildung sind Stege 712 gezeigt, die versetzt zu den Stegen 711 angeordnet sind und sich von dem im unteren Bereich der Abbildung gezeigten Bereich der ersten Ebene 71 in Richtung der zweiten Ebene 72 erstrecken. Entsprechend versetzte Stege 722 erstrecken sich von dem im unteren Bereich der Abbildung gezeigten Bereich der Ebene 71 in Richtung der Ebene 72. Zwischen den Stegen 712,722 sind die Übergangsschrägen 74 angeordnet. Perforationen 741,742 sind entsprechend wie zuvor beschrieben vorhanden. Die Schnittkonturen sind wie zu Figur 9 beschrieben. Beim auf Falten von der zweidimensionalen Form in die dreidimensionale Form der Feder 7 bilden die Übergangsschrägen 73,74 zueinander versetzt angeordnete, parallele Ebenen. Die Übergangsschrägen 73 bilden eine Reihe 733 und die Übergangsschrägen 74 bilden eine Reihe 734, die zueinander parallel sind.

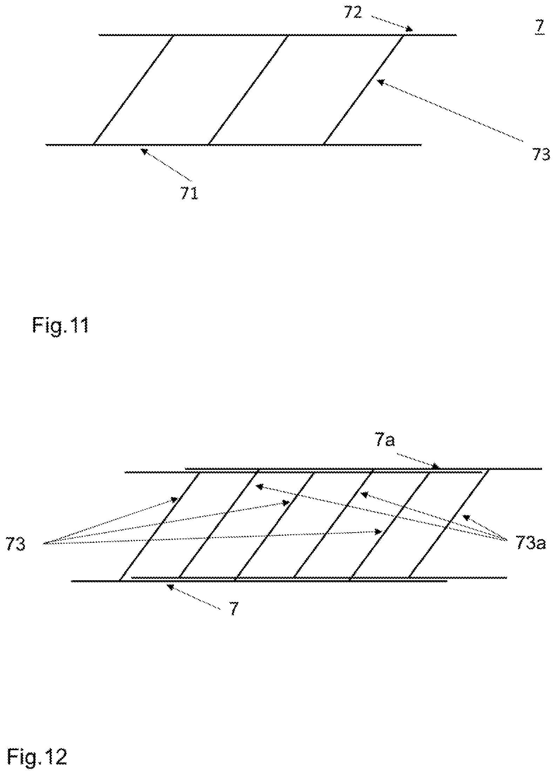

Fig.11 zeigt eine Feder 7 gemäß der Erfindung in ihrer dreidimensionalen Form in Seitenansicht. Man erkennt die in dieser Form voneinander beanstandeten Ebenen 71,72, die mittels der Übergangsschrägen 73 miteinander verbunden sind. Die Übergangsschrägen 73 sind schräg angeordnet und in der dargestellten Ausführungsformen jeweils zueinander parallel.

Fig. 12 zeigt zwei Federn 7, 7a gemäß der Erfindung in Seitenansicht. Die Federn 7, 7a sind versetzt zueinander angeordnet, sodaß ihre jeweiligen Federn 73, 73a abwechselnd zueinander angeordnet sind. Mittels diesen beispielsweise ineinander gesteckten Federn 7, 7a wird eine dichtere Aufeinanderfolge von Lamellen 82 erreicht, und somit eine verbesserte Abschattung.

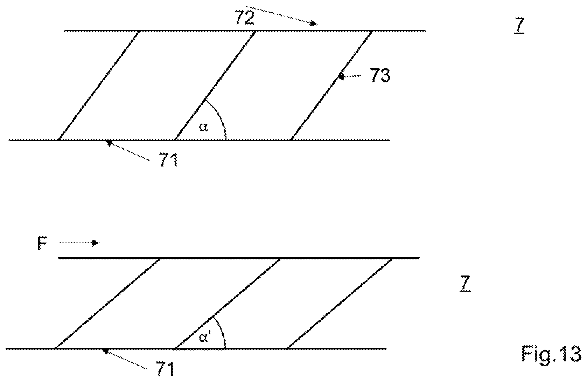

Fig. 13 zeigt eine Feder 7 in Seitenansicht, oben ohne Kraftausübung auf die Ebenen 71,72, und unten mit Kraftausübung auf die Ebenen 71,72. Man erkennt, daß die Übergangsschrägen 73 im oberen Teil der Abbildung, also in ihrem Ursprungszustand, einen anderen Anstellwinkel α aufweisen als in unteren Teil der Abbildung, in dem der Anstellwinkel α' kleiner ist. Dies wird durch Ausübung einer Kraft F auf eine der beiden Ebenen 71,72 während die jeweils andere mechanisch fixiert ist, oder von Kräften auf beide Ebenen 71,72 aber in entgegengesetzte Richtungen erzielt. Die Kraft F kann parallel, senkrecht, oder im Winkel zur Ebene 71,72 eingeleitet werden.

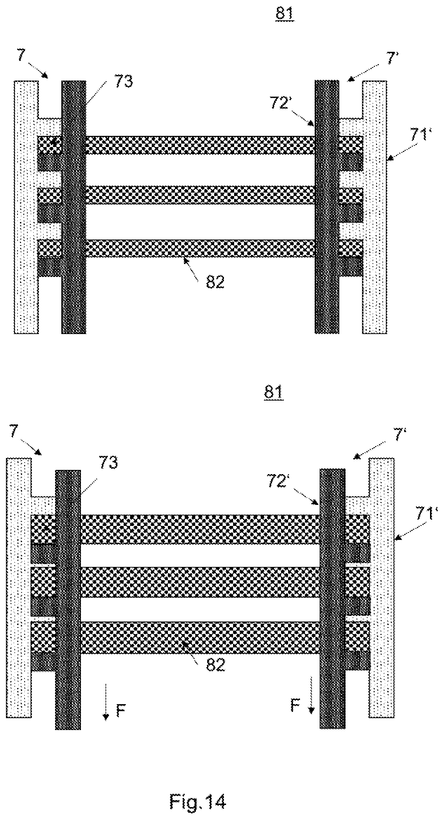

Fig. 14 zeigt ein Blendschutzelement 81 in Draufsicht, im unteren Teil der Abbildung mit und im oberen Teil der Abbildung ohne Kraftausübung. Das Blendschutzelement 81 weist links ein Feder 7 und rechts eine Feder 7' auf. Diese weisen wie oben beschrieben, erste Ebenen 71,71' und zweite Ebenen 72,72' auf. Lamellen 22 sind zwischen den Federn 7,7' gespannt. In der gezeigten Ausführungsform sind die Lamellen 82 an ihren Enden an den Übergangsschrägen 73 befestigt, die in der Abbildung daher nicht sichtbar sind. Man erkennt im oberen Bereich der Abbildung, daß die Ebenen 71, 71' und 72, 72' nicht gegeneinander verschoben sind. Im unteren Bereich der Abbildung wirkt einer Kraft F auf die Ebenen 72, 72', wodurch diese gegenüber den ersten Ebenen 71, 71' verschoben werden. Die Übergangsschrägen 73 ändern dabei ihren Winkel und damit auch die Lamellen 82.

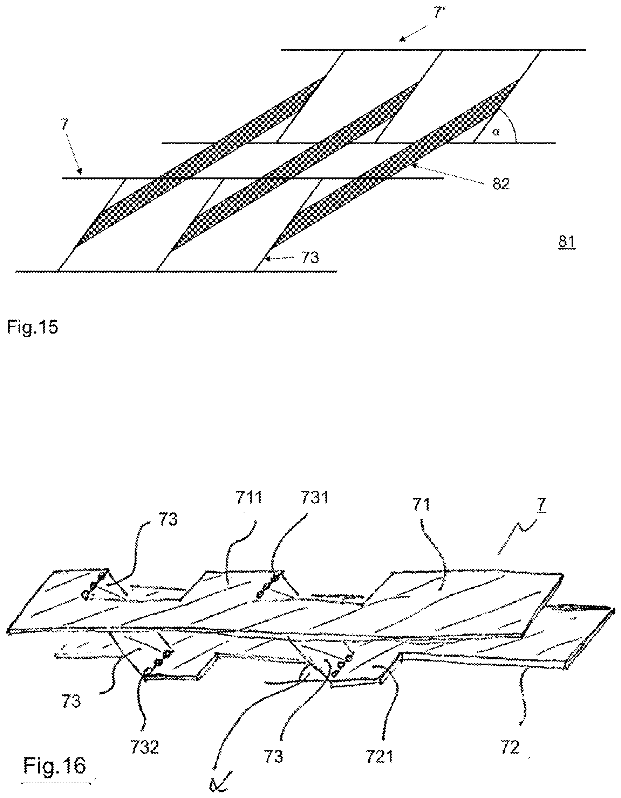

Fig. 15 zeigt ein Blendschutzelement 81 in schematischer räumlicher Ansicht. Man erkennt zwei nur durch Linien stilisierte Federn 7, 7' mit ihren Übergangsschrägen 73, an denen die Lamellen 82 befestigt sind. Auch der Anstellwinkel α ist gezeigt.

Fig.16 zeigt eine schematische räumliche Darstellung einer erfindungsgemäßen Feder 7 in ihrer dreidimensionalen Form. Man erkennt die räumlich voneinander getrennten Ebenen 71,72. Die erste Ebene 71 befindet sich oberhalb der zweiten Ebene 72. Die Übergangsschrägen 73 verlaufen schräg von links oben nach rechts unten. Oben sind sie mit den Stegen 711 verbunden, an ihrem unteren Ende mit den Stegen 721. Im Übergangsbereich von Steg 711, 721 und Übergangsbereich 73 befindet sich eine Perforation 731. Wird die obere Ebene 71 durch eine Kraftausübung nach links verschoben, so wird der Anstellwinkel Alpha kleiner, die Übergangsschräge 73 ist weniger stark geneigt und somit auch die mit ihr in Kontakt stehende, hier nicht gezeigte jeweilige Lamelle. Wird die obere Ebene 71 durch eine Kraftausübung nach rechts verschoben, so wird der Anstellwinkel α größer, die Übergangsschrägen 73 stehen steiler und somit auch die entsprechenden Lamellen. Durch die einstückige Ausführung der Feder 7 ist gewährleistet, daß die Übergangsschrägen 73 in diesem Fall immer parallel zueinander sind, also den gleichen Anstellwinkel α aufweisen.

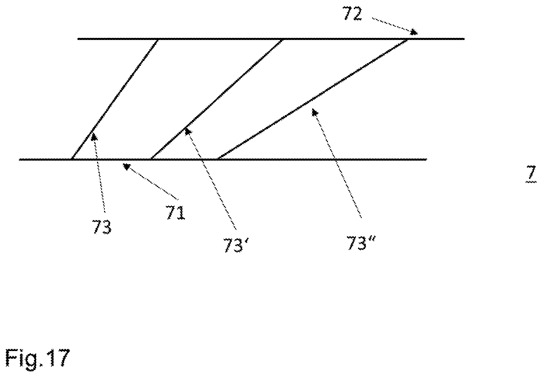

Fig.17 zeigt eine Variante einer erfindungsgemäßen Feder 7 in Seitenansicht. Diese Variante weist Übergangsschrägen 73, 73', 73" mit unterschiedlichen Anstellwinkeln auf. Dies wird durch unterschiedliche Länge der Übergangsschrägen 73, 73', 73" erreicht, die hier der Anschaulichkeit wegen übertrieben stark dargestellt sind. In der dargestellten Variante wird ein Anstellwinkelgradient erzielt. Je nachdem, stark sich die Längen der Übergangsschrägen 73, 73', 73" voneinander unterscheiden ist vorgesehen, daß die Ebenen 71, 72 biegsam gestaltet sind. Alternativ ist vorgesehen, daß sich im Übergangsbereich zwischen Steg 711,721 und Übergangsschräge 73 mehrere geeignet angeordnete Perforationen 731, entsprechende Nuten 734 oder Randausnehmungen 735 befinden, die für eine erhöhte Flexibilität in diesem Bereich sorgten, und die dann unterschiedlichen Anstellwinkel α, α', α" ermöglichen.

Die Erfindung betrifft mit anderen Worten folgendes: Eine Entspiegelung erfolgt in Head-Up-Displays über eine Blendlichtfalle, eine sogenannte Glaretrap, mit einer gebogenen Folie. Diese Konstruktion hat eine Mindest-Einbautiefe entsprechend der Folienkrümmung zur Folge. Eine Entspiegelung von Head-Up-Displays die die Windschutzscheibe als Spiegelelement bzw. Projektionsfläche nutzen erfolgt mittels Lamellen bzw. einer Gitterstruktur als abschließende Baugruppe, siehe beispielsweise Fig.5. Insbesondere für Head-Up-Displays mit Lichtwellenleiter im flachen Verbau wird eine Lösung zur Entspiegelung benötigt, da flache Glasbauteile direkt unter der Windschutzscheibe besonders anfällig für störende Reflexionen sind. Diese Lösung ist vorzugsweise winkelverstellbar, um Abschattungen in der Eyebox zu reduzieren. Es sind vorzugsweise in einem Rahmen gespannte Lamellen zur Entspiegelung vorgesehen.

Erfindungsgemäß werden verschiedene Anstellwinkel der Lamellen für verschiedene Eyebox-Positionen ermöglicht. Dies hilft, unerwünschte Abschattung zu vermeiden. Die Erfindung schlägt eine gesicherte Lösung vor, um die Winkelverstellung der Lamellen zu ermöglichen.

Erfindungsgemäß wird eine gleichmäßige Winkelverstellung aller Lamellen im Bauteil erzielt. Es wird nur ein einziges Element zur Winkelverstellung benötigt. Eine Verstellung bzw. Ansteuerung jeder einzelnen Lamelle ist somit nicht erforderlich.

Die Erfindung betrifft einen nachgiebigen Federmechanismus für ein winkelverstellbares Antireflexionsgerät, das Blendschutzelement 81. Aktuell sind für bildgebende Verfahren, wie sie beispielsweise für Fernrohr, Beamer, oder Monitor genutzt werden, nur Entspiegelungen oder Blickschutzverfahren mit fixem Winkel, meistens senkrecht zu Oberfläche, bekannt. Dies sind beispielsweise eine Sichtschutzfolie für Handy, ein Antireflexionsgerät für Fernrohr oder ähnliches. Es sind auch Lösungen mit grob einstellbarem Transmissionswinkel, beispielsweise Jalousien für Fenster, bekannt. Diese nichtverstellbaren Methoden erlauben es nicht, daß das System sich auf den Betrachter einstellt. Blickwinkel und Winkelbereich für Sichtschutz/Reflexionsschutz sind gleich oder voneinander abhängig. Für Anwendungen, die nur einen besonders schmalwinkligen Lichteinfall erlauben sollen, aber gleichzeitig einen größeren Blick-/Transmissionswinkelbereich und einen hohen Transmissionsgrad erlauben sollen, ist eine sehr feine Einstellung des Transmissionswinkel und eine sehr geringe Abdeckung im Transmissionsbereich notwendig. Eine Abhängigkeit von äußeren Einflüssen, wie Temperatur oder Feuchte, auf den Stellwinkel sollte möglichst klein sein.

Die Lamellen 82 werden erfindungsgemäß mit einer nachgiebigen Mechanik basierend auf einer dreidimensional geformten Feder 7 außerhalb des Sichtbereiches realisiert. Die Feder 7 wird aus einem Stück Folie oder Blech geschnitten. Schnittmuster sind in Fig.9 (einfache Ausführung) und Fig.10 (Doppelte Ausführung mit Versatz) gezeigt. Die erste Ebene 71, sowie alle anderen Ebenen bildet hierbei einen idealerweise zusammenhängenden Bereich. Jede Ebene 71, 72 ist über Stege 711,712,721,722 in der jeweiligen Ebene mit Übergangsschrägen 73,73',73",74 mit der nächsten Ebene verbunden. Zwischen Stegen 711,712,721,722 und Übergangsschrägen 73,73',73",74 können Perforationen 741,742 genutzt werden, um die effektive Elastizität in dem Bereich zu erhöhen.

Anschließend wird das Blech/die Folie in zwei oder in mehrere Ebenen gebogen. Fig.11 zeigt das Ergebnis in der Seitenansicht. Der Verstellwinkel ist schnittmusterbedingt und kann damit für jede Lamelle 82 individuell festgelegt werden. So kann ein Verstellwinkelgradient über die Ausstrahlfläche des Head-Up-Displays erreicht werden. Anzahl der Ebenen sowie Versatz können nach Belieben verändert und erhöht werden. Mehrere Federn 7,7a können ineinandergesteckt oder neben bzw. übereinander angebracht werden, um die Anzahl der Wiederholeinheiten pro Längeneinheit zu verdoppeln oder zu vervielfachen, siehe Fig.12. wird entweder eine Ebene fixiert und die jeweils nächste Ebene einer Kraft entlang der Ebene ausgesetzt, oder werden beide Ebenen gegensätzlichen Schub oder Zug ausgesetzt, so verändert sich der Winkel der Lamellen 82, siehe Fig.13.

Die Federn 7 selbst befinden sich am Produkt außerhalb es optische Funktionsbereiches, siehe Fig.14. An den Übergangsbereichen werden die Lamellen 82 gemäß einer Ausführungsform angebracht, siehe Fig.15.

In einer weiteren Ausführungsvariante werden die Lamellen 82 durch Kontakt mit den Übergangsschrägen 73 nur im Winkel verstellt und anderweitig befestigt. Die Übergangsschrägen 73 können in einer Ausführungsvariante etwa der Höhe der Lamelle 82 entsprechen oder deutlich länger ausgeführt werden. Im Fall, daß die Übergangsschrägen 73 deutlich größer als die Lamellen 82 sind, wird vorteilhafter Weise in die Übergangsschrägen 73 eine Mulde angeordnet, um die Positionierung der Lamellen 82 bei der Montage zu erleichtern.

Der veränderte Lamellenstellwinkel verändert die effektive Abdeckung des Strahlengangs, siehe Fig.14. Vorteilhafterweise werden die zusammenhängenden Streifen in den verschiedenen Ebenen noch mit Verstärkungen verbunden.

Die Lösung gemäß der Erfindung erlaubt eine hysteresefreie und spielfreie Einstellung des Anstellwinkels für die Lamellen 82 der "Jalousien". Die Flächendeckung im Transmissionsbereich ist dabei minimal, somit gelangt möglichst viel Licht von der gewünschten Quelle zum Auge 62, während möglichst viel Störlicht daran gehindert wird, zum Auge 62 des Betrachters zu gelangen. Der Anstellwinkel ist bei der erfindungsgemäßen Lösung prinzipbedingt temperaturunabhängig.

Die erfindungsgemäße Lösung läßt sich auch anwenden in konventionellen Head-Up-Displays (beispielsweise spiegelbasierten). Hier wird das Blendschutzelement vorzugsweise als abschließende Baugruppe eingesetzt. Die erfindungsgemäße Lösung läßt sich auch anwenden als verstellbare Entspiegelung innerhalb von Baugruppen. Das Blendschutzelement ist dann in die Baugruppe integriert. Die erfindungsgemäße Lösung läßt sich auch anwenden als Sichtschutz für Displays (Privatsphärefilter) als adaptive Lösung. Die erfindungsgemäße Lösung läßt sich auch anwenden als Sichtschutz für Fenster/Lichtkuppelfenster (Smartwindows) zur Helligkeitseinstellung. Die erfindungsgemäße Lösung ist auch für militärische Anwendungen wie die Reflexionsvermeidung für Zielfernrohre oder allgemein die Entspiegelung von Optiken einsetzbar oder zur Reflexionsvermeidung bzw. Blendschutz für Lidar-Geräte (Lidar: Light Detection and Ranging - lichtgestützte Ortung und Abstandsmessung), Kameras und Überwachungskameras. Die Erfindung kann auch in der Raumfahrt, beispielsweise zum Blendschutz bei optischen Meßinstrumenten oder zur präzisen Ortsauflösung von Strahlungsquellen, Anwendung finden.

## Patentansprüche

1. Gerät zum Generieren eines virtuellen Bildes (VB), mit:
- einem Anzeigeelement (11) zum Erzeugen eines Bildes;
- einem Lichtwellenleiter (5, 510, 520) zum Aufweiten einer Austrittspupille und
- einem dem Lichtwellenleiter (5) im Strahlengang nachgeordneten Blendschutzelement (81), wobei das Blendschutzelement (81) eine Jalousie (83) ist, die mehrere Lamellen (82) aufweist,
**dadurch gekennzeichnet, dass**
- das Blendschutzelement (81) zumindest eine einstückige Feder (7,7',7a) aufweist,
- jede der zumindest einen einstückigen Federn (7,7',7a) eine erste Ebene (71) und eine zweite Ebene (72) aufweist, die mittels Übergangsschrägen (73,73',73",74) miteinander verbunden sind, und
die Lamellen (82) jeweils an einer Übergangsschräge (73,73',73",74) der zumindest einen einstückigen Feder (7,7',7a) zur Anlage kommen.

2. Gerät nach Anspruch 1, aufweisend zumindest zwei parallele Reihen (723,743) von Übergangsschrägen (73,74), die versetzt zueinander angeordnet sind.

3. Gerät nach einem der vorhergehenden Ansprüche, wobei die Übergangsschräge (73,74) in ihrem Übergangsbereich zu zumindest einer der ersten Ebene (71) und der zweiten Ebene (72) eines aus Perforation (731,732,741,742), Nut (734) und Randausnehmung (735) aufweist.

4. Gerät nach einem der vorhergehenden Ansprüche, wobei die Übergangsschrägen (73,73',73") der einstückigen Feder (7) unterschiedliche Länge aufweisen.

5. Gerät nach einem der vorhergehenden Ansprüche, wobei mehrere Federn (7,7a) ineinander verschachtelt oder nebeneinander angeordnet sind.

6. Gerät nach einem der vorhergehenden Ansprüche, wobei die Lamellen (82) einen variabel einstellbaren Anstellwinkel (α) aufweisen.

## Claims

1. Device for generating a virtual image (VB), having:
- a display element (11) for generating an image;
- an optical waveguide (5, 510, 520) for expanding an exit pupil and
- a glare protection element (81) downstream of the optical waveguide (5) in the beam path, with the glare protection element (81) being a blind (83) having a plurality of slats (82), **characterized in that**
- the glare protection element (81) has at least one single-piece spring (7, 7', 7a),
- each of the at least one single-piece springs (7, 7', 7a) has a first plane (71) and a second plane (72), which are connected to each other by means of transition slants (73, 73', 73", 74), and the slats (82) each rest against one transition slant (73, 73', 73", 74) of the at least one single-piece spring (7, 7', 7a).

2. Device according to Claim 1, having at least two parallel rows (723, 743) of transition slants (73, 74), which are arranged offset from one another.

3. Device according to either of the preceding claims, wherein the transition slant (73, 74) has in its transition region to at least one of the first plane (71) and the second plane (72) one of a perforation (731, 732, 741, 742), a groove (734) and a peripheral cutout (735).

4. Device according to any of the preceding claims, wherein the transition slants (73, 73', 73") of the single-piece spring (7) have different lengths.

5. Device according to any of the preceding claims, wherein a plurality of springs (7, 7a) are interleaved or arranged next to one another.

6. Device according to any of the preceding claims, wherein the slats (82) have a variably settable setting angle (α).

## Revendications

1. Appareil destiné à générer une image virtuelle (VB), comprenant :
- un élément d'affichage (11) destiné à générer une image ;
- un guide d'ondes optiques (5, 510, 520) destiné à élargir une pupille de sortie ; et
- un élément anti-éblouissement (81) placé en aval du guide d'ondes optiques (5) sur le chemin optique, l'élément anti-éblouissement (81) se présentant sous la forme d'un store (83) comprenant plusieurs lamelles (82), **caractérisé en ce que**
- l'élément anti-éblouissement (81) comprend au moins un ressort formé d'un seul tenant (7, 7', 7a) ;
- chacun du ou des ressorts formés d'un seul tenant (7, 7', 7a) comprend un premier plan (71) et un second plan (72) qui sont reliés entre eux par des biseaux de transition (73, 73', 73", 74), et les lamelles (82) viennent respectivement en appui sur un biseau de transition (73, 73', 73", 74) de l'au moins un ressort formé d'un seul tenant (7, 7', 7a).

2. Appareil selon la revendication 1, comprenant au moins deux rangées parallèles (723, 743) de biseaux de transition (73, 74) qui sont disposées de manière décalée les unes par rapport aux autres.

3. Appareil selon l'une quelconque des revendications précédentes, dans lequel le biseau de transition (73, 74) présente, dans sa zone de transition vers au moins l'un du premier plan (71) et du second plan (72), au moins l'un d'une perforation (731, 732, 741, 742), d'une rainure (734) et d'un évidement de bord (735).

4. Appareil selon l'une quelconque des revendications précédentes, dans lequel les biseaux de transition (73, 73', 73") du ressort formé d'un seul tenant (7) présentent des longueurs différentes.

5. Appareil selon l'une quelconque des revendications précédentes, dans lequel plusieurs ressorts (7,7a) sont imbriqués les uns dans les autres ou disposés les uns à côté des autres.

6. Appareil selon l'une quelconque des revendications précédentes, dans lequel les lamelles (82) présentent un angle d'inclinaison (α) réglable de manière variable.
